# EUROPEAN PATENT SPECIFICATION

(11) **EP 0 291 568 B1**
(45) Date of publication and mention of the grant of the patent: **24.04.1996**
(21) Application number: 87114124.8
(22) Date of filing: 28.09.1987
(51) Int. Cl.: B29C 73/10

(54) **Patches for repairing or retreading radial-ply tires**
Flicken zum Reparieren oder Runderneuern von Radialreifen
Pièce pour réparer ou rechaper des pneumatiques radiales

(30) Priority: 23.02.1987 IT 210787
(43) Date of publication of application: 23.11.1988
(73) Proprietor: R.F.P. S.r.l. Ricostruzione Fascia Prestampata, I-70026 Modugno (Bari) (IT)
(72) Inventor: Ferrara, Giuseppe, Bari (IT)
(74) Representative: Russo, Saverio, Dott. Ing. Ing. S. Russo & C. s.r.l.

(56) References cited:
- FR-A- 1 548 676
- FR-A- 2 015 190
- US-A- 3 133 585
- US-A- 3 260 296
- US-A- 4 285 382
- US-A- 4 333 508

## Description

The present invention relates to a patch for repairing or retreading radial-ply tires.

The rubber-patches produced nowadays and employed to repair the tires to be retreaded or only to be repaired, comprise one or more layers of rubber coated cords i.e. plies, which are made solidal to each other by means of a vulcanization process.

Said cords, usually made of a synthetic fibre and forming the fabric embedded in said plies, are conventionally arranged parallel to each other and to the longitudinal axis of each of said plies, whereby said cords, as a whole, are arranged parallel to the longitudinal axis i.e. to the largest dimension of the patches.

The fact that said cords are so arranged to be all mutually parallel provides for some drawbacks both to the tires to be retreaded and to those which need only to be repaired therewith, in particular when repair patches, comprising a plurality of such plies superposed to each other, are used to repair said tires, previously or not to a retreading thereof.

The following drawbacks are provoked by the not suitable features of said currently known rubber-patches:
A) Said known patches show an unelastic strength and rigidity to the mechanical stresses acting perpendicularly to their surface, because some of said cords, embedded therein, are stretched when the patch is bent in use.
   In fact, when the patch is bent in use so as to assume a convex form, the cords, located on the same side of said patch where said convexity appears, are stretched; conversely, when the patch is bent in use the other way round, the cords located on the opposite side thereof are stretched in turn.
   This drawback becomes even greater when the rubber patch has been vulcanized onto the metallic body or carcass of a tire, specifically onto the sidewalls thereof, where the flexibility is greater, according to the fact that the metallic radial cords, forming said tire carcass, provide for a further unelastic strength and rigidity to the compression stresses.
B) Said known patches withstand slightly to the mechanical stresses acting perpendicularly to said cords, and hence, specifically in the radial-ply tires, to the mechanical stresses acting perpendicularly to the metallic radial cords forming the radial ply carcass thereof. On the other hand, in the tires retreaded or only repaired, by means of the current conventional patches, the following drawbacks have been observed:
C) an overheating of the regions to which said patches have been bonded, on account of the increased stiffness of the tire repaired in this way and, consequently, an increased wear and a quicker ageing of the compound forming the external surface of the tire in said regions;
D) the danger of a possible detachment of the patch from the repaired zone, on account of its rigidity, which does not allow said repaired zone to deform in the same way as the rest of the tire, or, at least, the danger of cracking or flowover of the patch along its perimeter and of a consequent thinning of the rubber coated onto the extremities of the synthetic cords, which causes the air to infiltrate into the channels where the metallic cords of the tire carcass are contained and which provokes both the disconnection of said metallic cords from the rubber into which they are embedded and the delamination of the patch itself.
   The air which infiltrates into said channels containing said cords causes also the swelling thereof and, being said air overheated when the tire is in use, it may also provoke a swelling or bulging of the external surface of the tire with its consequent explosion;
E) an increasing of the mechanical stresses to which the metallic radial cords of the tire casing are submitted, especially in the region corresponding to the transversal edges of the patch, on account of the greater stiffening of said region provoked by the patch itself;
F) a buckling and twisting of the internal surface or liner of the tire, after the vulcanization process has been performed, provoked by the excessive rigidity of the patch which does not adapt to the deformations of the tire casing, especially in the sidewalls thereof.

This provokes an imbalance of the tire, when it is rolling in use, and produces abnormal pulsating mechanical stresses.

On the contrary, the reduction of the number of superposed plies, having parallel rectilinear cords embedded therein, in order to increase the flexibility of the patches, is not always possible, because it results in a diminished strength of the patches and provokes settling or collapsing of the repaired zone both during the retreading process and when the tire is in use.

In document FR-A-1 548 676, there is disclosed a patch of the type stated in the pre-characterizing part of claim 1, for exclusively repairing the belt of radial tires.

Such patches are rectangular in form and are composed of one ply with mutually parallel metallic cords, upon which two or more plies of fibre cords are superposed.

The plies embedding fibre cords may have the cords parallel to those of the ply with metallic cords or inclined at an angle of 45°, alternatively, compared with the metallic cords, or all mutually parallel and perpendicular to the same metallic cords.

The patches having the fibre cords parallel to the metallic ones are preferably used to repair the tires of both heavy and fast vehicles and are characterized by a relatively greater degree of flexibility obtained in all directions different from the metallic and fibre cords.

The patches having plies of fibre cords inclined at an angle of 45° as regards to the metallic cords, are more rigid than the first ones and are preferably used to carry out repairs on tires which turn at medium speed and which are subject to moderate distortion during normal rotation.

The application of the patches must be carried out in such a way that the metallic cords, or those which have only a slight degree of elasticity, be adjacent and parallel to the radial cords of the tire: the surface of the patches must not extend considerably beyond the two corners that the tread forms with the rubber of the sidewalls.

This does not allow for the application of the patches for repairs in correspondence with the corners of the belt and on the sidewalls, both because this would cause a stiffening of the corners of the tire as regards to the tire belt, and because in the sidewalls, the metallic cords of the patch must have a radial distortion in order to allow their overlap on those of the tire.

The metallic cords referred to in this document are arranged parallel to the radial cords of the tire and not to the diagonal metallic cords of the tire belt.

In document FR-A- 2 015 190, there is disclosed a repair patch for radial tires comprising at least two superposed cord plies, constituted by cords embedded in rubber. As shown in Fig. 2, the acute angle at which the cords of one ply extend to the cords of the adjacent ply is very small. It is stated that depending on the deformation stresses to be expected the acute angle may be chosen correspondingly great or small.

The aim of this design is to avoid interpenetration of the cords of the superposed plies owing to the compression of the patch, which may procure damages also to the repaired area.

Such a patch has no metallic cords so that it can only be used to repair slight damages. Furthermore this kind of patch is not suitable for repairing side walls of the tire.

The primary object of the present invention is, first of all, to overcome the above mentioned drawbacks of the rubber-patches comprising superposed plies whereby the cords, made of a synthetic fibre and embedded therein, are all parallel to each other, the largest dimension of said plies, defining the direction of the longitudinal axis thereof, i.e. to provide patches having a new structure and showing a high strength by means of a plurality of superposed layers or plies, whereby said new patches are, at the same time, highly flexible and allow, hence, by their employement, tires to be repaired and/or to be retreaded according to the best technique, even high pressure molding machines are used to repair and/or retread said tires.

Another important object of the invention, which is a consequence of the above mentioned one, is to provide patches showing a degree of elasticity comparable, i.e. of the same order of magnitude, to the degree of flexibility shown by the tire carcass or casing and fit to be adapted to all kinds of deformations, continuous, alternative and of flection, to which the tire may be submitted both when it is in use and during the vulcanization process, i.e, such that said patches will provide the repaired zones with the same mechanical features and performances shown by the undamaged regions of the tire itself.

These objects are achieved in accordance with the present invention by a patch as defined in claim 1.

The patch according to the invention has an increased flexibility without diminishing the strength and the mechanical resistance thereof. Furthermore, the repaired zone is provided with an endurance and a reliability comparable to those shown by the damaged region of the repaired tire and, finally, the claimed invention allows the vulcanization process of the tires to retread, not only by means of autoclaves, but also by means of high pressure molding machines, while avoiding that the tires may be submitted to permanent deformations and without modifying, i.e. diminishing, the elasticity of the repaired zones thereof.

The advantages obtained by means of the present invention have to be seen essentially in the increased reliability and endurance of both the tires which need only to be repaired and those which are intended to be retreaded too.

The life of a tire, when in use, is, nowadays, about five years; hence, in order to be economically sound, the extensive use of the cheaper retreaded tires shall provide, in addition to safety guaranties, also for guaranties of reliability and endurance which have to be proportional and comparable to the increased reliability and endurance of the new tires.

The invention is disclosed in detail hereafter, making reference to the figures on the appended drawings sheets, which show and illustrate some preferred implementations of the invention and some preferred embodiments and uses of the patches accordingly produced, whereby, in particular:
Fig. 1, shows a patch according to the invention to repair radial ply tires having been damaged in correspondence with the internal region of the stabilizing belt;
Fig. 2, shows a patch which is not an embodiment of the claimed invention, said patch being intended to carry out overall restorations of radial-ply tires having been damaged in correspondence with the tread shoulder, of the sides and middle of the stabilizing belt and of the tire sidewalls;
Fig. 3, shows a patch according to the invention intended to repair radial-ply tires having been damaged in correspondence with the tread shoulder;
Fig. 4, shows a trapezoidally shaped patch according to the invention, comprising metallic cords embedded in a ply thereof and a rubber dowel, intended to repair damages in the sidewalls of radial-ply tires;
Fig. 5, shows a patch without metallic cords which is not an embodiment of the claimed invention, said patch being intended to repair bulges in the sidewalls of radial-ply tires.

As it will be evident from the drawings, the patches according to the invention comprise, essentially and above all, the mode of arranging, within each of the superposed plies 1a and 1b, the rectilinear cords, made of a synthetic fibre and constituting the fabrics embedded in each of said plies respectively, parallel to each other and to a common direction, whereby said common direction is inclined relative to the common longitudinal symmetry axis A of each ply, i.e. of the whole patch which, in radial ply tire, must be applied in such a way that the above mentioned axis A be adjacent to, or superposed on, the radial cords, or in such a way that it is orthogonal to the rolling direction R of the tire, so as to form with said longitudinal axis A an angle of 90°.

The invention comprises further the step of superposing two such plies 1a and 1b in such a way that the direction of their respective cords forms an angle with the longitudinal axis A of the whole patch, alternatively in the clockwise and in the counter-clockwise direction. When damages on the sidewalls of radial-ply tires have to be repaired, the invention comprises the further step of positioning the patch, on the damaged region of the tire sidewall, in such a way that the direction of the patch longitudinal axis A lays superposed to the radial direction of the metallic cords embedded in said tire sidewalls, i.e. lays superposed to the direction of that metallic radial cord which lays in the middle of the damaged region.

As a consequence thereof, the cords embedded in each of the superposed plies 1a and 1b constituting the patch, are alternatively angularly inclined relative to said radial direction.

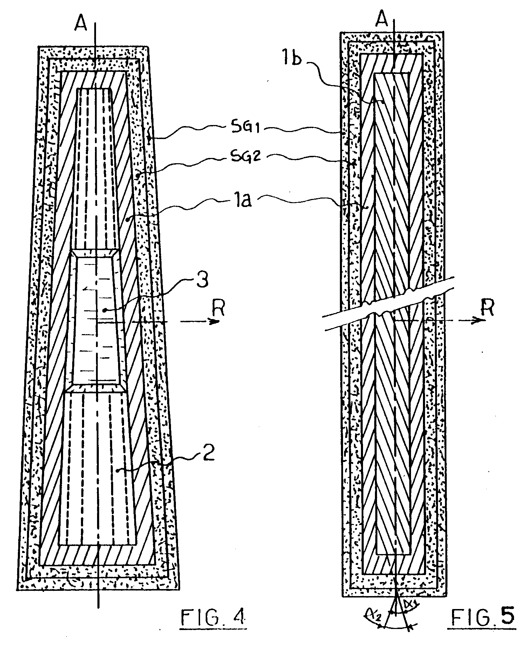

The angular inclination of the cords embedded in each ply, relative to the longitudinal axis A of the patch, is represented by a variable angle α 1, greater than 0°, but not exceeding 20° (see fig. 4).

The number of said plies, having said inclined cords embedded therein, which are superposed to form the patch, may vary e.g. until eight.

In some peculiar cases, when it is desired to provide for a patch having an greater rigidity, the patch according to the invention may be produced by superposing, in direct contact to each other, a first group of two or more plies in which the cords, which constitute the fabrics therein embedded, are all inclined in the same direction, e.g. clockwise, and so to form the same angle included between 0° and 20° relative to their common longitudinal axis A, and a second group of two or more plies, superposed to said first group, whereby the cords, embedded in the two or more plies of said second group, are likely arranged as those of the first group, but so inclined, e.g. in the counterclockwise direction, as to form the same angle as above with their common longitudinal axis A, but on the opposite side thereof.

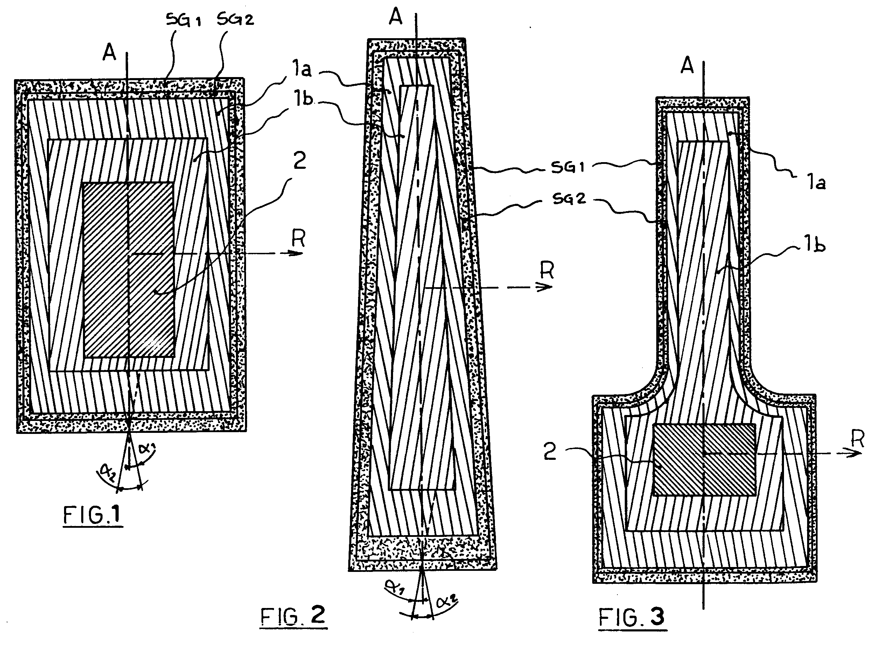

The angle α 2 (Figs. 1, 2 and 5) is that formed with each other by the common directions of the cords embedded into plies 1a and 1b respectively.

The patches produced according to the various implementations of the invention show, superposed to the plies 1a and 1b, rubber layers SG₁ and SG₂ having the function of ensuring the tightening of the repaired zones.

Another important feature of the invention consists in providing the patch produced according to the invention to be used in repairing heavy damages as cuts, holes or tears in the sidewalls or in the tread, (see Figs. 1, 3, 4) of radial-ply tires, of a further ply 2 having embedded therein rectilinear metallic cords arranged parallel to each other and inclined relative to the above mentioned symmetry longitudinal axes A.

All patches must be applied to the tires in such a way that their longitudinal axis A is perpendicular to the rolling direction R of the tire, i.e. must be superposed on the radial cords of the tyre. The metallic cords, embedded in the further ply 2, are inclined, relative to said longitudinal axis A of the patch, as the radial cords forming the casing of the radial-ply tires, when said patches are intended to repair damages in the tire sidewalls, as it is illustrated on Fig. 4.

The metallic cords are radially arranged like those embedded in the sidewalls of the radial-ply tire.

When said patches are intended to repair damages in the stabilizing belt or by the tread shoulder, said metallic cords, embedded in said further ply 2, are arranged similarly to those embedded in the stabilizing belt, i.e. in such a way as to form, with the rolling direction R, an angle complementary of that formed by the cords embedded into said stabilizing belt with said rolling direction R (see Figs. 1 and 3).

The patches produced according to the present invention, provide advantageously also for a very strong bonding of said further ply 2, having said rectilinear metallic cords embedded therein, sandwiched between the plies 1a, 1b and the tire casing, thereby preventing said metallic cords from being unravel led along the transversal edges of said further ply 2.

It is obvious that the implementation of the invention is in no way effected or modified, if cords made of a natural fibre are used instead of cords made of a synthetic fibre and if the accordingly produced patches assume geometrical forms different from those specifically disclosed in the present application.

It is further pointed out that the overall area of said further ply 2, having rectilinear metallic cords embedded therein, is smaller than the area of the plies 1a and 1b to which it is superposed, thereby providing for an increased endurance and reliability of the regions of the tires where a damage has been repaired, and that the larger overall area of said plies 1a and 1b provides for a gradual progressive decreasing of the stiffening of the repaired zone, in the direction towards the external edges of said plies 1a and 1b.

During the vulcanization process, the patches produced according to the implementations of the invention, do not provide for any permanent deformation of the therewith repaired zones, as happens with the current traditional patches which show excessive rigidity.

The patches according to the invention allow, moreover, the repaired tire to have more flexibility, when in use, in particular during the flat rolling of the tread due to overload or to a lowering of the inside air pressure; said flexibility also required when the rolling tire encounters extraneous bodies, e.g. stones or other impediments, which provoke the tread itself to be sharply inflected towards the tire inside.

The same easy and fluent deformations, due to the various bonding stresses which may be applied thereto, are also allowed in the sidewalls of the repaired tires.

The disclosed patches may also be supplied with cements and adhesive rubber layers, known per se, which are vulcanizable both at a low and at a high temperature or even self-vulcanizing.

The main steps which implement the process to make the patches according to the invention may be summarized as follows:
1) mutual superposition of the plies 1a and 1b, whereby the cords, made of synthetic or radial fibres embedded therein, are rectilinear and equally inclined relative to the longitudinal symmetry axis A of the ply to which they belong; the area of ply 1a being greater than the area of ply 1b and superposed, being so positioned, relative to each other, that said cords are alternatively inclined in the clockwise and in the counter-clockwise direction, relative to the common longitudinal axis A of the resulting patch-rubber;
2) superposition, to the above mentioned layers or plies 1a and 1b, of a further ply 2, having rectilinear metallic cords embedded therein; said further ply 2 being so positioned that said rectilinear metallic cords are oriented either like those radially arranged in the tire sidewalls or like those diagonally arranged in the tire belt;
3) superposition, on both opposed sides of said set of plies 1 e 2, of rubber layers SG₁ and SG₂ being more elastic and of a larger area than the ply mentioned in preceding points 1 and 2, to ensure both the smoothing of the repaired surface and the tightening thereof;
4) vulcanization of the sandwich comprising the layers SG₁ and SG₂ and the plies 1a, 1b and 2, by means of the most suitable vulcanization process to ensure that, after said vulcanization process, said sandwich results a single body.

It is pointed out that, in the present disclosure, by the expression "ply" it is intended a layer of rubber coated cords, while by "rubber layer" it is intended a layer of rubber having no cords embedded therein.

## Claims

1. Patch for repairing or retreading radial-ply tires, comprising superposed cord plies formed by rubber-coated fabrics of cords made of synthetic or natural fibres, the cords of each ply being mutually parallel and rectilinear, the axis of symmetry of each ply being superposed on the axis of symmetry (A) of the patch, and an additional ply (2) having parallel metallic cords embedded in rubber, characterized in that the plies are assembled by vulcanization and that the cords of at least two plies (1a) and (1b), form, in turn with the symmetry axis (A) of the patch, an angle greater than 0° and less than 20° in a clockwise direction in one of the plies and in a counter-clockwise direction in the other superposed ply, the patch being applied in such a way that the axis of symmetry is parallel to, or superposed on, the radial cords of the tire, the parallel metallic cords of the additional ply (2) being oriented either like those radially arranged in the sidewalls of the tire when the patch is destined to be applied on the sidewalls or like those diagonally arranged in the tire belt when the patch is destined to be applied in the area of the tire belt or in the area of the two corners that the belt forms with the sidewalls.

2. Patches for repairing or retreading radial-ply tires as claimed in Claim 1, characterized by the fact that the patches are shaped according to the area where they have to be applied, i.e. they are rectangular in shape if they are to be applied to repair damages of the belt, they are shaped as a small shovel if they are to be applied to repair damages on the two corners that the belt forms with the sidewalls of the tire, or trapezoidal in shape if they are applied to repair damages on the sidewalls of the tire.

## Patentansprüche

1. Flicken, zum reparieren oder runderneuern von Radialreifen, die überliegende Schichte umfassend, die aus gummiertem Leinwand gebildet sind, die mit Kordfäden aus synthetischen oder naturlichen Fasern ausgerüstet sind, wobei die Kordfäden jeder Schicht zueinander parallel und geradlinig verlaufen, wobei die Symmetrieachse jeder Schicht auf der Symmetrieachse (A) der Flicke aufliegt, und umfassend eine weitere Schicht (2), die aus metallischen Kordfäden besteht, die parallel verlaufen und im Gummi eingelassen sind, dadurch gekennzeichnet, dass die darüberliegende Schichten mittels Vulkanisierens untereinander verbunden sind, und dass die Kordfäden von mindestens zwei Schichten (1a) und (1b) ihrerseits mit der Symmetrieachse (A) der Flicken einen Winkel bilden, der grosser als 0° und kleiner als 20° ist, in einer der Schichten im Uhrzeigersinn und in der anderen darüberliegenden Schichte im Gegenuhrzeigersinn, wobei die Flicken so aufgelegt sind, dass die Symmetrieachse parallel zu den radialen Kordfäden des Reifens oder darüberliegend verläuft, wobei die parallelen metallischen Kordfäden der zusätzlichen Schicht (2) entweder wie jene ausgerichtet sind, die radial in der Seitewanden des Reifens eingelassen sind, wenn die Flicke auf die Seitewanden aufgelegt werden soll, oder wie jene die sich diagonal im Rollenband des Reifens befinden, wenn die Flicke im Bereich des Rollenbands des Reifens oder im Bereich der beiden Kanten, die das Rollenband mit den Seitenwanden bildet, aufgelegt werden soll.

2. Flicken nach Patentansprüch 1, dadurch gekennzeichnet, dass die Flicken je nach dem Bereich, in dem sie aufgelegt werden sollen, geformt sind, nämlich dass sie eine rechteckige Form aufweisen, wenn sie zwecks reparieren von Schäden am Rollenband aufgelegt werden sollen, oder die Form einer kleinen Schaufel zum reparieren von Schäden auf den beiden Kanten, die das Rollenband mit den Seitewanden des Reifens bildet, oder dass sie trapezförmig sind, wenn sie zwecks reparieren von Schäden an den Seitewanden des Reifens aufgelegt werden sollen.

## Revendications

1. Pièce pour réparer ou rechaper des pneumatiques radiales, contenant des couches superposées formées par toiles gommées enchassant des cordes en fibres synthétiques ou naturelles, les cordes de chaque couche en étant réciproquement parallèles et rectilignes, l'axe de symétrie de chaque couche en étant superposée sur l'axe de symétrie (A) de la rustine même, et contenant de plus une couche ultérieure (2) enchâssant des cordes métalliques parallèles, caractérisée en ce que les couches sont assemblées au moyen de vulcanisation et en ce que les cordes d'au moins deux couches (1a) et (1b) forment, a tour avec l'axe de symétrie (A) de la rustine, un angle majeur que 0° et moindre que 20° dans le sens horaire dans une des couches et le même angle dans le sens antihoraire dans l'autre couche superposée, la rustine en étant appliquée si bien que l'axe de symétrie (A) soit parallèle ou superposé, aux cordes radiales du pneu, les cordes métalliques parallèles de la couche additionnelle (2) en étant orientées ou comme celles-là inserées radialement dans la surface laterale du pneu quand la rustine doit être appliquée sur les flancs du pneu, ou comme celles-là diagonalement arrangées dans la ceinture du pneu quand la rustine doit être appliquée dans la zone de la ceinture du pneu ou dans la zone des deux coins circulaires qui séparent la ceinture da les flancs.

2. Rustines pour réparer ou pour rechaper des pneus a structure radiale suivant la Revendication 1, caractérisées en ce que les rustines sont modelées selon la zone où ils doivent être appliquées, c'est à dire ils ont une forme rectangulaire s'ils doivent être appliquées pour réparer des dommages à la ceinture, tandis que ils ont la forme d'une petite pelle s'ils doivent être appliquées pour réparer des dommages sur les deux coins que la ceinture forme avec les flancs du pneu, ou bien ils ont une forme trapézoïdale s'ils doivent être appliquées pour réparer des dommages sur les flancs du pneu.
